# EUROPEAN PATENT APPLICATION

(11) **EP 4 776 023 A1**
(43) Date of publication of application: **15.07.2026**
(21) Application number: 24863110.3
(22) Date of filing: 28.08.2024
(51) Int. Cl.: G01S 7/481, G01S 7/4863, G01S 17/894, G02B 3/00

(54) **LIGHT-RECEIVING DEVICE AND LIDAR DEVICE INCLUDING SAME**

(30) Priority: 07.09.2023 KR 20230119026
(71) Applicant: LG Innotek Co., Ltd., Seoul 07796 (KR)
(72) Inventor: MA, Seung Jae, Seoul 07796 (KR); KIM, Tae Kyung, Seoul 07796 (KR); KIM, Ho Young, Seoul 07796 (KR)
(74) Representative: DREISS Patentanwälte PartG mbB
(86) International application number: PCT/KR2024/012836
(87) International publication number: WO 2025/053529

(57) **Abstract**

According to an embodiment of the present invention, a lidar device comprises: a light-emitting unit for emitting an optical signal to an object; and a light-receiving unit for receiving the optical signal reflected from the object. The light-receiving unit includes: an image sensor; and a micro lens array disposed on the image sensor. The micro lens array includes: a first surface disposed to face the image sensor; and a second surface opposite to the first surface. A light-blocking layer is disposed on a portion of the second surface.

## Description

### [Technical Field]

The present invention relates to a light-receiving device and a LiDAR device including the same.

### [Background Art]

Light Detection and Ranging (LiDAR) uses a laser pulse which is emitted from a light-emitting unit and then reflected back by a target object to measure a distance to the target object or to create a shape of the target object. LiDAR is applied to various technical fields that require three-dimensional imaging. For example, LiDAR may be applied to technical fields such as meteorology, aviation, aerospace, and vehicles. Recently, LiDAR has become increasingly significant in the field of autonomous driving.

In general, a light-emitting unit of a LiDAR generates an output optical signal and irradiates it on an object, a light-receiving unit receives an input optical signal reflected from the object, and an information-generating unit generates information about the object using the input optical signal received by the light-receiving unit.

LiDAR may be broadly classified into mechanical LiDAR and solid-state LiDAR. The mechanical LiDAR may obtain a 360-degree field of view by rotating a light-emitting unit and a light-receiving unit. The solid-state LiDAR may be, for example, one of Micro Electro Mechanical System (MEMS) LiDAR, flash LiDAR, or Optical Phase Array (OPA) LiDAR. In MEMS LiDAR, a tilt angle of a mirror may be finely varied by an electric signal. In flash LiDAR, an optical flash is used, and a single large-area laser pulse may illuminate a forward environment. In OPA, an optical phase modulator controls a velocity of light passing through a lens, and accordingly a shape of an optical wavefront may be controlled.

In general, a light-receiving unit of mechanical LiDAR includes an image sensor having a one-dimensional array structure, and a ghost phenomenon caused by double reflection is likely to occur. Noise caused by the ghost phenomenon may provide incorrect information to the LiDAR rather than light reflected from an actual object, and this may generate a ghost image in a point cloud obtained as a result of object detection.

### [Disclosure]

### [Technical Problem]

A technical object to be achieved by the present invention is to provide a light-receiving device in which noise caused by a ghost phenomenon is minimized, and a LiDAR device including the same.

### [Technical Solution]

A LiDAR device according to an embodiment of the present invention includes a light-emitting unit configured to irradiate an optical signal to an object and a light-receiving unit configured to receive an optical signal reflected from the object, wherein the light-receiving unit includes an image sensor and a micro lens array disposed on the image sensor, wherein the micro lens array includes a first surface disposed to face the image sensor and a second surface opposite to the first surface, and wherein a light-blocking layer is disposed on a portion of the second surface.

The image sensor includes a pixel array, and wherein the first surface of the micro lens array includes an effective region including a plurality of micro lenses corresponding to the pixel array, a buffer region including a plurality of micro lenses disposed to surround the effective region, and a peripheral region disposed to surround the buffer region, wherein the light-blocking layer may be disposed on a region of the second surface opposite to the buffer region and the peripheral region.

The pixel array includes an m*n array, and a ratio of m to n may be 8 or greater.

The first surface of the micro lens array includes (m+2a)*(n+2b) micro lenses, wherein each of the a and the b is an integer of 1 or greater, and wherein the effective region includes m*n micro lenses that may be in one-to-one correspondence with the m*n pixel array.

The pixel array may include a 16*2 pixel array, a 32*2 pixel array, a 64*2 pixel array, a 128*2 pixel array, a 256*2 pixel array, a 512*2 pixel array, or a 1024*2 pixel array.

The second surface may be a planar surface.

A thickness of the light-blocking layer may be from 0.05 to 0.2 times an average sag value of the plurality of micro lenses in the effective region.

The light-blocking layer may have a light transmittance of 1% or less.

The light-blocking layer may include chrome.

The LiDAR device may further include a plate on which the light-emitting unit and the light-receiving unit are mounted, and a motor configured to rotate the plate.

A light-receiving device according to an embodiment of the present invention includes an image sensor and a micro lens array disposed on the image sensor, wherein the micro lens array includes a first surface disposed to face the image sensor and a second surface opposite to the first surface, and wherein a light-blocking layer is disposed on a portion of the second surface.

The image sensor includes a pixel array, and wherein the first surface of the micro lens array includes an effective region including a plurality of micro lenses corresponding to the pixel array, a buffer region including a plurality of micro lenses disposed to surround the effective region, and a peripheral region disposed to surround the buffer region, wherein the light-blocking layer may be disposed on a region of the second surface opposite to the buffer region and the peripheral region.

### [Advantageous Effects]

According to an embodiment of the present invention, a light-receiving device in which noise caused by a ghost phenomenon is minimized, and a LiDAR device including the same, may be obtained. When the noise caused by the ghost phenomenon is minimized, a ghost image is eliminated, and accordingly, accuracy of object recognition can be improved.

### [Description of Drawings]

FIG. 1 is a block diagram of a LiDAR device according to an embodiment of the present invention.
FIG. 2 is a top view of an image sensor according to an embodiment of the present invention.
FIG. 3 is a bottom view of a micro lens array according to an embodiment of the present invention.
FIG. 4 is a cross-sectional view of an image sensor and a micro lens array taken along a first direction, according to an embodiment of the present invention.
FIG. 5 is a cross-sectional view of an image sensor and a micro lens array taken along a second direction, according to an embodiment of the present invention.
FIG. 6 is a cross-sectional view of a light-receiving unit taken along a first direction, according to an embodiment of the present invention.
FIG. 7 is a cross-sectional view of an image sensor and a micro lens array taken along a first direction, according to another embodiment of the present invention.
FIG. 8 is a cross-sectional view of an image sensor and a micro lens array taken along a second direction, according to another embodiment of the present invention.
FIG. 9 is a simulation result comparing amounts of light absorbed by an image sensor when a light-blocking layer is disposed and when the light-blocking layer is not disposed, according to an embodiment of the present invention.
FIG. 10 is a perspective view of a LiDAR system according to an embodiment of the present invention.
FIG. 11 is an exploded view of a LiDAR system according to an embodiment of the present invention.
FIG. 12 is an exploded view of a LiDAR device according to an embodiment of the present invention.

### [Modes of the Invention]

Hereinafter, exemplary embodiments of the present invention will be described in detail with reference to the accompanying drawings.

However, the spirit of the present invention is not limited to the embodiments described below, and the present invention may be embodied in various forms. One or more elements of the embodiments may be selectively combined or substituted with one another without departing from the spirit or scope of the present invention.

In addition, the terminology used in the embodiments of the present invention, including technical and scientific terms, unless explicitly defined otherwise, will be interpreted as having meanings that are generally understood by those of ordinary skilled in the art to which the present invention pertains, and terms having meanings commonly understood, such as those defined in dictionaries, will be interpreted in the context of the related technologies.

In addition, the terminology used in the embodiments of the present invention is used for the purpose of describing the embodiments only and is not intended to limit the scope of the present invention.

In the present specification, the singular forms may be understood to include plural forms unless the context clearly indicates otherwise, and the expression "at least one of A, B, and/or C" may be understood to include any combination of one or more of A, B, and C.

In addition, expressions such as "first," "second," "A," "B," "(a)," and "(b)," may be used to describe elements of embodiments of the present invention for convenience of description.

These expressions are used solely to distinguish one element from another, and do not limit the substance, order, or arrangement of the corresponding elements.

Furthermore, when an element is described as "connected," "combined," or "joined" to another element, the description should be understood to include that the element is "connected," "combined," or "joined" to the other elements not only directly, but also indirectly through one or more intervening elements.

In expression "formed or disposed "on (over) or under (below)" another element," the terms "on (over)" and "under (below)" include not only a direct contact between two elements, but also formation or disposition in which one or more other elements are interposed between the two elements. Furthermore, the terms "on (over)" and "under (below)" may refer to both upper and lower directions relative to one element.

A LiDAR device according to an embodiment of the present invention may refer to a LiDAR device that is mounted in a vehicle and measures a distance between an object and the vehicle, but it is not limited thereto. The LiDAR device according to an embodiment of the present invention may extract depth information using a Time of Flight (ToF) principle or a phase shift principle. In the present specification, the LiDAR device may refer to an information-generating device, a depth information-generating device, or a camera device.

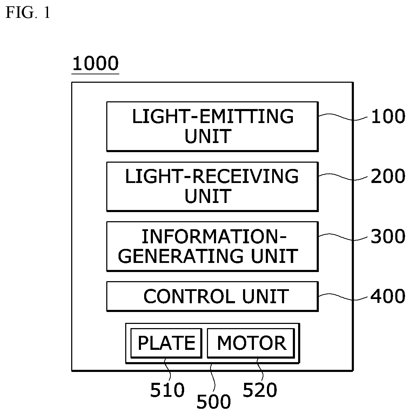

FIG. 1 is a block diagram of a LiDAR device according to an embodiment of the present invention.

Referring to FIG. 1, a LiDAR device 1000 according to an embodiment of the present invention includes a light-emitting unit 100, a light-receiving unit 200, an information-generating unit 300, and a control unit 400
The light-emitting unit 100 may generate and output an optical signal in a form of a pulse wave or a continuous wave. The continuous wave may have a form of a sinusoid wave or a squared wave. By generating an output optical signal in the form of a pulse wave or a continuous wave, the LiDAR device 1000 may detect a time difference or a phase difference between the output optical signal that is output from the light-emitting unit 100 and an input optical signal that is reflected from a target region and input to the light-receiving unit 200. In the present specification, an output light may refer to light that is output from the light-emitting unit 100 and incident on an object, and an input light may refer to light that is output from the light-emitting unit 100, reaches a target region, is reflected from the target region, and is then input to the light-receiving unit 200. From a perspective of the target region, the output light may be incident light, and the input light may be reflected light. In the present specification, the target region may be used interchangeably with the object.

The light-emitting unit 100 includes a light source and a lens group.

The light source generates and outputs a laser pulse. The light source may use a light emitting diode (LED) and may have a configuration in which a plurality of light emitting diodes are arranged according to a predetermined pattern. Alternatively, the light source may include an organic light emitting diode (OLED) or a laser diode (LD). Alternatively, the light source may be a vertical cavity surface emitting laser (VCSEL). The VCSEL may be one of a laser diode that converts an electric signal into an optical signal and may output (light having) a wavelength in a range of approximately 800 nm to 1000 nm, for example, approximately 850 nm or approximately 940 nm. The light source is repeatedly turned on and off at a predetermined time interval to generate an output optical signal in the form of a pulse wave or a continuous wave. The predetermined time interval may be a frequency of the output optical signal.

The lens group may collect light output from the light source and output the collected light to the outside. The lens group may be disposed above the light source to be spaced apart from the light source. Here, the term "above the light source" may refer to a side from which light is output from the light source. The lens group may include at least one lens, and when the lens group includes a plurality of lenses, the lenses may be aligned with respect to a central axis to form an optical system. Here, the central axis may be identical to an optical axis of the optical system. The lens group may include a diffusion member configured to receive light output from the light source and to refract or diffract the received light to output.

The light-receiving unit 200 may receive an optical signal reflected from a target region. In this case, the received optical signal may be an optical signal output by the light-emitting unit 100 and reflected from the target region.

The light-receiving unit 200 includes an image sensor, a lens group disposed on the image sensor, and a filter.

The optical signal reflected from the target region may pass through the lens group of the light-receiving unit 200. An optical axis of the lens group of the light-receiving unit 200 may be aligned with an optical axis of the image sensor. The filter may be disposed on an optical path between the target region and the image sensor. The filter may filter light having a predetermined wavelength range. The filter may allow light having a specific wavelength to pass therethrough. For example, the filter may allow light in an infrared band or a near-infrared band to pass therethrough, while blocking light outside the infrared band or the near-infrared band. The image sensor may receive an optical signal and output the received optical signal as an electrical signal. The image sensor may detect light having a wavelength corresponding to a wavelength of light output by the light-emitting unit 100. For example, the image sensor may detect light in the infrared band or the near-infrared band.

The image sensor may be configured in a structure in which a plurality of pixels are arranged in a grid form.

The light-receiving unit 200 and the light-emitting unit 100 may be disposed side by side. The light-receiving unit 200 may be disposed next to the light-emitting unit 100. The light-receiving unit 200 may be disposed in the same direction as the light-emitting unit 100. Alternatively, the light-receiving unit 200 and the light-emitting unit 100 may be disposed to face a different direction from each other. When the light-receiving unit 200 and the light-emitting unit 100 are disposed to face a different direction from each other, an optical path conversion member may be further disposed between the light-receiving unit 200 and the light-emitting unit 100.

The information-generating unit 300 generates information about the target region using the input optical signal input to the light-receiving unit 200. The information about the target region may include three-dimensional information about the target region. For example, the information about the target region may include depth information about the target region, or shape information of the target region. For example, the information-generating unit 300 may calculate depth information of an object, using time of flight (ToF) taken for the output optical signal output from the light-emitting unit 100 to be reflected from the object and then input to the light-receiving unit 200. For example, the information-generating unit 300 may calculate a time difference between the output optical signal and the input optical signal using an electric signal received by the image sensor, and may calculate a distance between the target region and the LiDAR device 1000 using the calculated time difference. For example, the information-generating unit 300 may calculate a phase difference between the output optical signal and the input optical signal using an electric signal received from the image sensor, and may calculate a distance between the target region and the LiDAR device 1000 using the calculated phase difference.

The control unit 400 controls operations of the light-emitting unit 100, the light-receiving unit 200 and the information-generating unit 300. The information-generating unit 300 and the control unit 400 may be implemented in a form of a printed circuit board (PCB). In addition, the information-generating unit 300 and the control unit 400 may be implemented in other forms of components. Alternatively, the control unit 400 may be included in a terminal or a vehicle in which the LiDAR device 1000 according to an embodiment of the present invention is disposed. For example, the control unit 400 may be implemented in a form of an application processor (AP) of a smartphone in which the LiDAR device 1000 according to an embodiment of the present invention is mounted, or in a form of an electronic control unit (ECU) of a vehicle in which the LiDAR device 1000 according to an embodiment of the present invention is mounted.

The LiDAR device 1000 according to an embodiment of the present invention may be a mechanical LiDAR configured to rotate 360 degrees. To this end, the LiDAR device 1000 may further include a rotation unit 500. The rotation unit 500 may further include a plate 510 on which the light-emitting unit 100 and the light-receiving unit 200 are mounted, and a motor 520 configured to rotate the plate 510. Accordingly, the LiDAR device 1000 may have a 360-degree field of view (FOV).

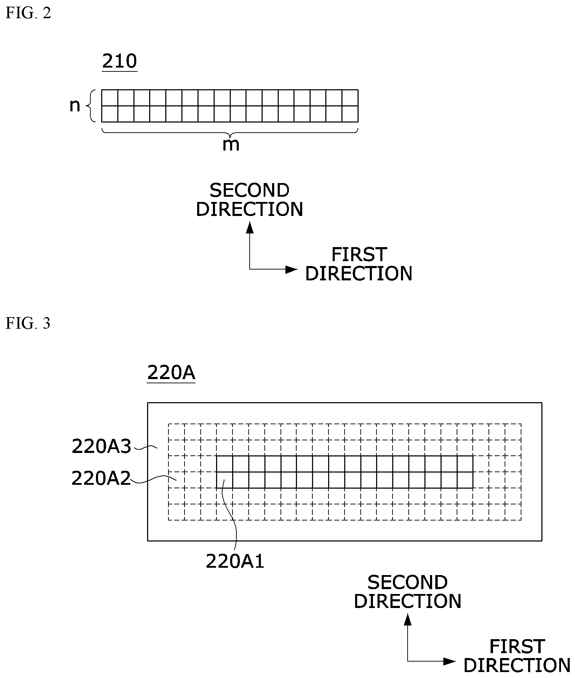

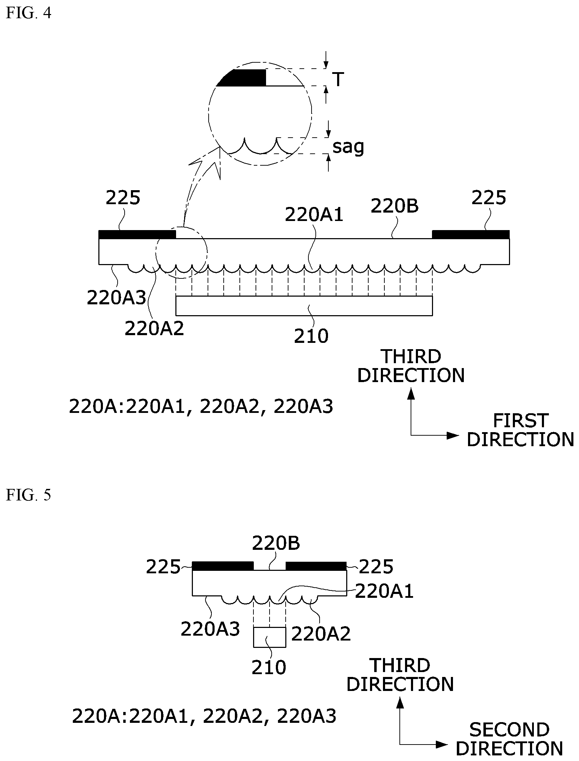

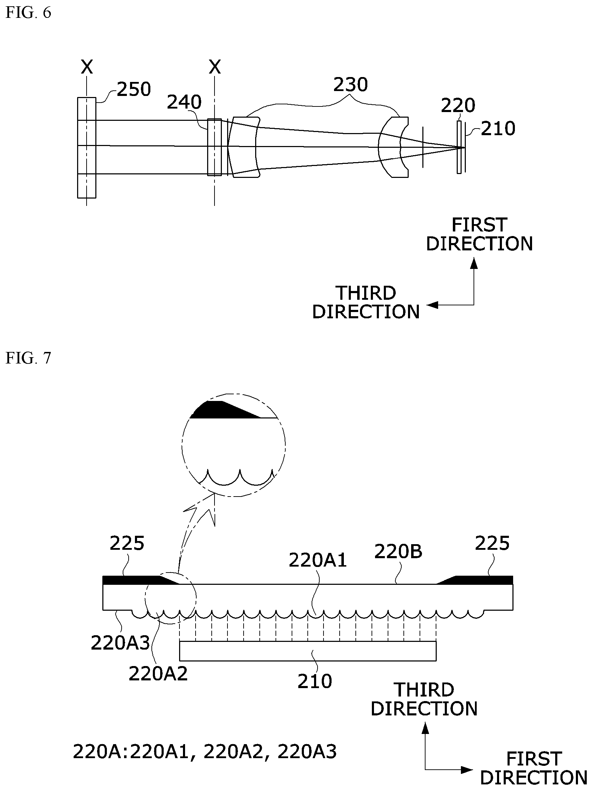

FIG. 2 is a top view of an image sensor according to an embodiment of the present invention, FIG. 3 is a bottom view of a micro lens array according to an embodiment of the present invention, FIG. 4 is a cross-sectional view of an image sensor and a micro lens array taken along a first direction, according to an embodiment of the present invention, FIG. 5 is a cross-sectional view of an image sensor and a micro lens array taken along a second direction, according to an embodiment of the present invention, and FIG. 6 is a cross-sectional view of a light-receiving unit taken along a first direction, according to an embodiment of the present invention.

Referring to FIGS. 2 to 6, the light-receiving unit 200 included in the LiDAR device 1000 according to an embodiment of the present invention includes an image sensor 210, a micro lens array 220 disposed on the image sensor 210, a lens group 230 disposed on the micro lens array 220, a filter 240 disposed on the lens group 230, and a window 250 disposed on the filter 240.

According to an embodiment of the present invention, the image sensor 210 includes a pixel array. Here, the pixel array may be a single photon avalanche detector (SPAD) array, and the SPAD array may include a plurality of SPADs. When the SPAD receives an optical signal, a photon may be detected by an avalanche phenomenon.

Here, the image sensor 210 includes a pixel array disposed along a first direction and a second direction, and a number of pixels disposed along the first direction may be greater than a number of pixels disposed along a second direction. For example, the image sensor 210 according to an embodiment of the present invention may include an m*n pixel array, where m may be greater than n. When a ratio of m to n is 8 or greater, the pixel array may be referred to as a one-dimensional pixel array or a one-dimensional SPAD array.

According to an embodiment of the present invention, the image sensor 210 may include a one-dimensional pixel array. For example, the image sensor 210 according to an embodiment of the present invention may include a 16*2 pixel array, a 32*2 pixel array, a 64*2 pixel array, a 128*2 pixel array, a 256*2 pixel array, a 512*2 pixel array, or a 1024*2 pixel array.

According to an embodiment of the present invention, the micro lens array 220 is disposed on the image sensor 210 to be spaced apart from the image sensor 210. The micro lens array 220 includes a first surface 220A disposed to face the image sensor 210 and a second surface 220B opposite to the first surface 220A, and a plurality of micro lenses protrude from the first surface 220A to face the image sensor 210. For convenience of description, the first surface 220A of the micro lens array 220 may be referred to as a bottom surface of the micro lens array 220, and the second surface 220B of the micro lens array 220 may be referred to as a top surface of the micro lens array 220. According to an embodiment of the present invention, a plurality of micro lenses may be formed on the first surface 220A of the micro lens array 220, and the second surface 220B of the micro lens array 220 may be a planar surface.

The first surface 220A of the micro lens array 220 according to an embodiment of the present invention includes an effective region 220A1 including a plurality of micro lenses corresponding to the pixel array of the image sensor 210, a buffer region 220A2 including a plurality of micro lenses and disposed to surround the effective region 220A1, and a peripheral region 220A3 disposed to surround the buffer region 220A2.

Here, the effective region 220A1 may be in one-to-one correspondence with a pixel array. That is, when the image sensor 210 includes an m*n pixel array, the effective region 220A1 includes m*n micro lenses, and pixels of the image sensor 210 may be in one-to-one correspondence with the micro lenses of the effective region 220A1. Accordingly, among optical signals incident on the light-receiving unit 200, optical signals incident on the effective region 220A1 may be detected by the image sensor 210 and used to recognize an object. The optical signals incident on the light-receiving unit 200 are collected by the micro lenses of the effective region 220A1 of the micro lens array 220, and thus light-receiving efficiency per pixel may be increased. Accordingly, the micro lens array 220 may be referred to as a sensor window.

Meanwhile, the buffer region 220A2 may be disposed around the effective region 220A1 so as to surround the effective region 220A1. For example, when the image sensor 210 includes an m*n pixel array, and the effective region 220A1 includes m*n micro lenses, the first surface 220A of the micro lens array 220 may include the buffer region 220A2 so as to include a total of (m+2a)*(n+2b) micro lenses. Here, a and b may be identical to or different from each other. For example, each of a and b may be 1 or greater and 10 or less, preferably 1 or greater and 5 or less, and more preferably 2 or greater and 3 or less. For example, a may be 3 and b may be 2. As such, when the first surface 220A of the micro lens array 220 includes the buffer region 220A2 surrounding the effective region 220A1, light collection efficiency of the effective region 220A1 is improved, thereby reducing loss of optical signals.

Meanwhile, the peripheral region 220A3 may be disposed around the buffer region 220A2 so as to surround the buffer region 220A2. In this case, the peripheral region 220A3 may be a planar surface. Accordingly, the micro lens array 220 may be joined to the image sensor 210 or to a structure within the light-receiving unit 200 through the peripheral region 220A3.

Referring to FIG. 6, the lens group 230, the filter 240 and the window 250 are sequentially disposed on the image sensor 210 and the micro lens array 220. Here, the lens group 230 may include a plurality of lenses. For example, the lens group 230 may include two lenses that are disposed to be spaced apart from each other, but it is not limited thereto. The filter 240 disposed on the lens group 230 may be a band-pass filter. For example, the filter 240 may be a band-pass filter that transmits only IR optical signals among optical signals input to the receiving unit 200. Although not shown, the lens group 230 and the filter 240 may be disposed on a lens barrel. It is illustrated that the image sensor 210, the micro lens array 220, the lens group 230, and the filter 240 are sequentially disposed, but they are not limited thereto, and may be disposed in an order of the image sensor 210, the micro lens array 220, the filter 240, and the lens group 230.

The window 250 is disposed outside the lens barrel, and after the optical signal reflected from the object is transmitted through the window 250, it is sequentially incident on the filter 240, the lens group 230, the micro lens array 220, and the image sensor 210. Accordingly, the window 250 may be referred to as a glass window or an external window. The optical signal output from the light-emitting unit 100 may be output to the outside through the window 250.

Referring again to FIGS. 4 and 5, the micro lens array 220 may be a transparent member. For example, the micro lens array 220 may include a transparent material, such as gallium phosphide (GaP), and thus efficiency of the image sensor 210 may be increased. However, stray light may be incident through the buffer region 220A2 and the peripheral region 220A3, which are regions other than the effective region 220A1 of the micro lens array 220, and this may result in a ghost phenomenon caused by a phantom point cloud.

According to an embodiment of the present invention, a light-blocking layer is disposed on some regions of the micro lens array 220, thereby minimizing the ghost phenomenon.

Referring to FIGS. 4 and 5, the micro lens array 220 includes the first surface 220A disposed to face the image sensor 210 and the second surface 220B opposite to the first surface 220A, and a light-blocking layer 225 may be disposed on a portion of the second surface 220B. Accordingly, the ghost phenomenon caused by stray light may be minimized.

Here, the light-blocking layer 225 may refer to a layer having a light transmittance of 1% or less, preferably 0.5% or less, and more preferably 0.1% or less. That is, since the light-blocking layer 225 is a layer through which light is not transmitted, light incident on the light-blocking layer 225 does not pass through the micro lens array 220 and may not be incident on the image sensor 210, thereby minimizing the ghost phenomenon caused by stray light.

Here, the light-blocking layer 225 may include a black material, and the black material may be coated or deposited on a portion of the second surface 220B of the micro lens array 220. The black material may include black chrome, a black epoxy resin, a black paint, etc., but it is not limited thereto.

According to an embodiment of the present invention, the light-blocking layer 225 may be disposed on a region of the second surface 220B of the micro lens array 220 opposite to the buffer region 220A2 and the peripheral region 220A3 of the first surface 220A. Accordingly, light incident on the region of the second surface 220B of the micro lens array 220 opposite to the buffer region 220A2 and the peripheral region 220A3 of the first surface 220A is blocked by the light-blocking layer 225 and is not incident on the image sensor 210, and only light incident on the effective region 220A1 of the first surface 220A of the second surface 220B of the micro lens array 220 may pass through the micro lens array 220 to be incident on the image sensor 210. Accordingly, a possibility of generating a ghost image due to incidence of stray light on the image sensor 210 may be reduced.

According to an embodiment of the present invention, a thickness T of the light-blocking layer 225 may be from 0.05 to 0.2 times, preferably from 0.05 to 0.15 times, more preferably from 0.075 to 0.125 times an average sag value of a plurality of micro lenses disposed on the effective region 220A1 of the micro lens array 220. Here, the sag value may refer to a sagittal depth of the micro lenses. For example, when the average sag value of the plurality of micro lenses disposed on the effective region 220A1 of the micro lens array 220 is 3 *µ*m, the thickness of the light-blocking layer 225 may be from 150 nm to 600 nm, preferably from 150 nm to 450 nm, and more preferably from 225 nm to 375 nm. When the thickness T of the light-blocking layer 225 is below a lower limit of the numerical range, a light-blocking effect is reduced, and thus stray light may be incident on the image sensor 210. When the thickness T of the light-blocking layer 225 exceeds the numerical range, an amount of light incident on the effective region 220A1 of the micro lens array 220 is reduced, and thus an object recognition accuracy of the image sensor 210 may be reduced.

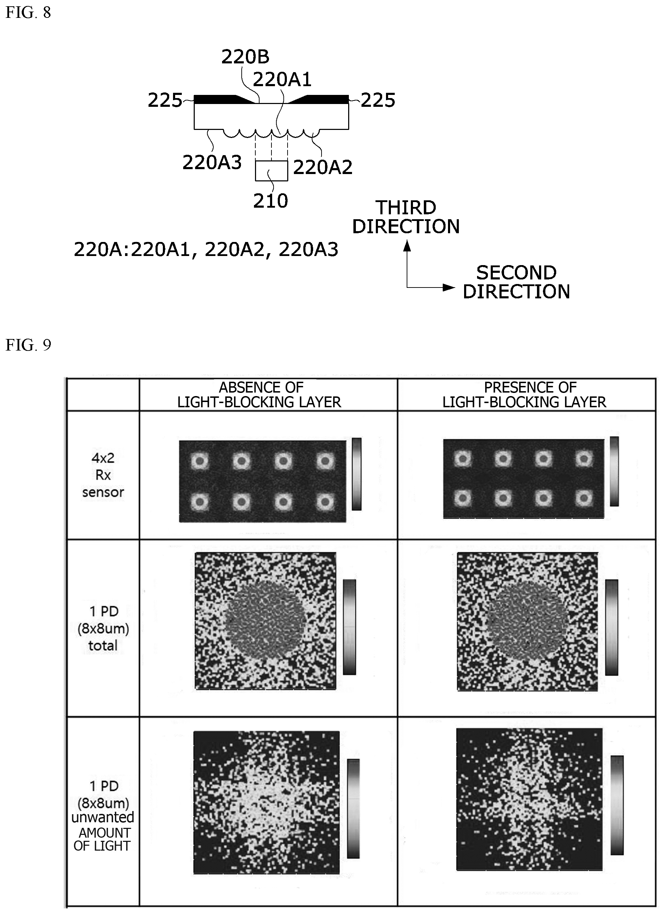

FIG. 7 is a cross-sectional view of an image sensor and a micro lens array taken along a first direction, according to another embodiment of the present invention, and FIG. 8 is a cross-sectional view of an image sensor and a micro lens array taken along a second direction, according to another embodiment of the present invention. Descriptions overlapping with those provided with reference to FIGS. 1 to 6 will be omitted for convenience of description.

Referring to FIGS. 7 and 8, the light-blocking layer 225 may be disposed on a region of the second surface 220B of the micro lens array 220 opposite to the buffer region 220A2 and the peripheral region 220A3 of the first surface 220A. Here, a thickness of the light-blocking layer 225 disposed on a portion of the region opposite to the buffer region 220A2 may be different from a thickness of the light-blocking layer 225 disposed on the region opposite to the peripheral region 220A3. For example, the thickness of the light-blocking layer 225 disposed on a portion of the region opposite to the buffer region 220A2 may be thinner than the thickness of the light-blocking layer 225 disposed on the region opposite to the peripheral region 220A3. As shown, the light-blocking layer 225 disposed on the region opposite to the buffer region 220A2 may include a region having a thickness that deceases toward a boundary between the buffer region 220A2 and the effective region 220A1. Accordingly, a problem in which an amount of light incident on the effective region 220A1 of the micro lens array 220 is reduced due to a height of the light-blocking layer 225 may be prevented, and object recognition accuracy of the image sensor 210 may be increased.

FIG. 9 and Table 1 are simulation results comparing amounts of light absorbed by an image sensor when a light-blocking layer is disposed and when the light-blocking layer is not disposed, according to an embodiment of the present invention.

**[Table 1]**

| | Absence of light-blocking layer | Presence of light-blocking layer |
|---|---|---|
| Total amount of light per pixel | 0.4682 | 0.4582 |
| Amount of ghost light per pixel | 0.0287 | 0.0194 |
| Ratio of the amount of ghost light to the total amount of light | 6.13% | 4.23% |

Referring to FIG. 9 and Table 1, for an image sensor including a 4*2 pixel array in which one pixel has an 8 *µ*m*8 *µ*m size, a total amount of light and an amount of ghost light are compared according to whether a light-blocking layer is present. Here, when the light-blocking layer is not disposed on the micro lens array, a total amount of light incident on one pixel is 0.4682, and an amount of ghost light thereof is 0.0287, and accordingly, it may be known that a ratio of the amount of ghost light to the total amount of light is 6.13%. Here, the amount of ghost light may be referred to as an amount of unwanted light.

On the other hand, when a light-blocking layer is disposed on the micro lens array, a total amount of light incident on one pixel is 0.4582 and an amount of ghost light thereof is 0.0194, and accordingly, it may be known that a ratio of the amount of ghost light to the total amount of light is 4.23%.

As such, when a light-blocking layer is disposed on the micro lens array according to an embodiment of the present invention, it may be known that the ratio of the amount of ghost light to the total amount of light is significantly reduced.

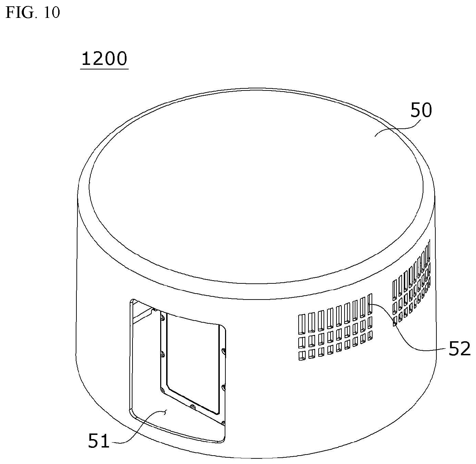

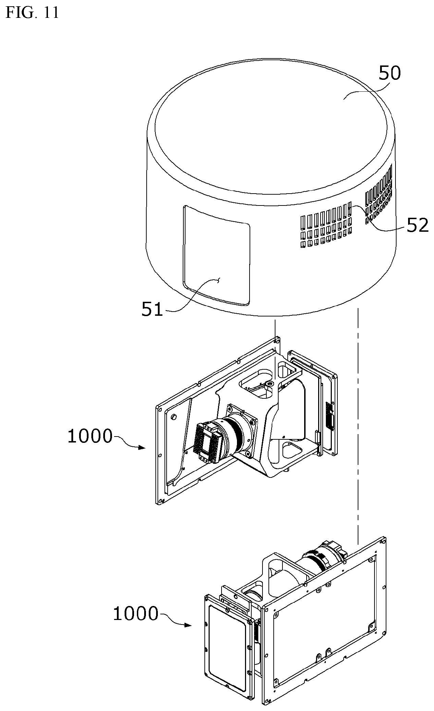

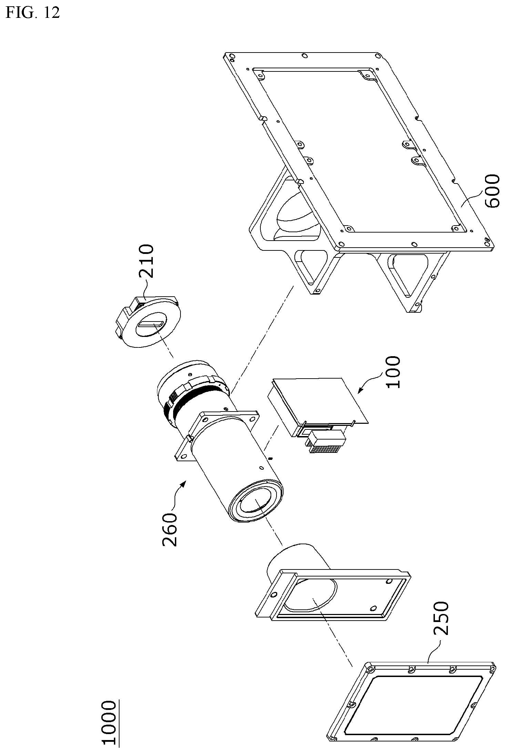

FIG. 10 is a perspective view of a LiDAR system according to an embodiment of the present invention, FIG. 11 is an exploded view of a LiDAR system according to an embodiment of the present invention, and FIG. 12 is an exploded view of a LiDAR device according to an embodiment of the present invention.

Referring to FIGS. 10 to 12, the light-emitting unit 100 and the light-receiving unit 200 may be accommodated within a housing 50 of a LiDAR system 1200. As shown, one LiDAR system 1200 may include a plurality of LiDAR devices 1000. For example, each LiDAR device 1000 included in the one LiDAR system 1200 may include the light-emitting unit 100 and the light-receiving unit 200, and two of the LiDAR devices 1000 may be disposed to face directions opposite to each other. One of the two LiDAR devices may be a mid-range LiDAR device, and the other one may be a long-range LiDAR device.

A plurality of openings may be formed in the housing 50. First openings 51 of the plurality of openings may be disposed to correspond to the window 250 of the LiDAR device 1000 and may serve as a path for emitting and receiving light. Second openings 52 of the plurality of openings may serve as a path for discharging heat generated by the LiDAR device 1000 accommodated within the housing 50.

A number of the first openings 51 may be smaller than a number of the second openings, and diameters of the first openings 51 may be larger than diameters of the second openings 52. Since the first openings 51 are disposed to correspond to the window 250 of the LiDAR device 1000, the number of the first openings 51 formed in the housing 50 may be identical to the number of the LiDAR devices 1000 accommodated within the housing 50.

Each LiDAR device 1000 includes the light-emitting unit 100 and the light-receiving unit 200, and to this end, each LiDAR device 1000 may further include a mount 600 on which the light-emitting unit 100 and the light-receiving unit 200 are mounted. The light-emitting unit 100 is disposed on a side surface of the light-receiving unit 200, and both light emitted from the light-emitting unit 100 and light incident on the light-receiving unit 200 after being reflected from an object may pass through the window 250.

Although not shown specifically, the light-emitting unit may include a substrate, a light source, an optical member, a shield member, and a diffusion member. The substrate may include a printed circuit board (PCB). The substrate may be connected to a connector through a flexible printed circuit board (FPCB). The light source may be disposed on the substrate, and the substrate may include a terminal. The light source may correspond to the above-described light source of the light-emitting unit 200. That is, the light source may include a plurality of emitters disposed in an array form. The plurality of emitters may be disposed in an m*n array such that the light-receiving unit 200 may correspond to the pixel array of the image sensor 210, but are not limited thereto. Operations of the plurality of the emitters may be controlled individually or integrally. The optical member may collect light emitted from the light source or convert an optical path of the light emitted from the light source. For example, when the light source is not disposed to face the window 250, the optical member may convert an optical path so that light emitted from the light source is emitted through the window 250. Alternatively, the light source may be an edge-emitting laser (EEL) diode. The shield member may surround the substrate and the light source, may be referred to as a cover can, and may be formed of a non-magnetic material, thereby blocking electromagnetic interference (EMI). The diffusion member may be a diffuser lens or a homogenizer. The diffusion member may be disposed on an optical path of the light emitted from the light source.

The light-receiving unit 200 may include a sensor unit and a lens unit. The sensor unit may include a substrate, an image sensor 210 disposed on the substrate and a micro lens array disposed on the image sensor 210. The image sensor 210 may detect infrared light or near-infrared light. The image sensor 210 may detect light having a specific wavelength among the infrared light or the near-infrared light. The lens unit may include a lens barrel, a plurality of lenses, a filter, and a lens hood. The image sensor 210 may detect light that has passed through the filter. The image sensor 210 may detect light in a wavelength band of the light source. Through this, the image sensor 210 may detect light that is emitted from the light source and reflected from an object, thereby sensing three-dimensional image information of the object.

As described above, the LiDAR device according to an embodiment of the present invention may be a mechanical LiDAR device. Accordingly, the LiDAR device according to an embodiment of the present invention may be designed to rotate 360 degrees by a motor.

The foregoing description has been provided with reference to an embodiment of the present invention by way of example, and therefore does not limit the present invention. It will be readily understood by one of ordinary skilled in that art that various modifications and applications not explicitly described herein may be made without departing from the essential spirit of scope of the present invention. For example, each of the components specifically described in the embodiments may be modified and implemented in various forms. Furthermore, differences arising from such modifications and applications should be construed as being included within the scope of the present invention as defined by the appended claims.

## Claims

1. A LiDAR device comprising:
a light-emitting unit configured to irradiate an optical signal to an object and
a light-receiving unit configured to receive an optical signal reflected from the object,
wherein the light-receiving unit includes
an image sensor and
a micro lens array disposed on the image sensor,
wherein the micro lens array includes
a first surface disposed to face the image sensor and a second surface opposite to the first surface, and
wherein a light-blocking layer is disposed on a portion of the second surface.

2. The LiDAR device of claim 1,
wherein the image sensor includes a pixel array, and
wherein the first surface of the micro lens array includes an effective region including a plurality of micro lenses corresponding to the pixel array,
a buffer region including a plurality of micro lenses disposed to surround the effective region, and
a peripheral region disposed to surround the buffer region,
wherein the light-blocking layer is disposed on a region of the second surface opposite to the buffer region and the peripheral region.

3. The LiDAR device of claim 2, wherein the pixel array includes an m*n pixel array, and a ratio of m to n is 8 or greater.

4. The LiDAR device of claim 3, wherein the first surface of the micro lens array includes (m+2a)*(n+2b) micro lenses,
wherein each of the a and the b is an integer of 1 or greater, and
wherein the effective region includes m*n micro lenses that are in one-to-one correspondence with the m*n pixel array.

5. The LiDAR device of claim 2, wherein the pixel array includes a 16*2 pixel array, a 32*2 pixel array, a 64*2 pixel array, a 128*2 pixel array, a 256*2 pixel array, a 512*2 pixel array, or a 1024*2 pixel array.

6. The LiDAR device of claim 2, wherein the second surface is a planar surface.

7. The LiDAR device of claim 2, wherein a thickness of the light-blocking layer is from 0.05 to 0.2 times an average sag value of the plurality of micro lenses in the effective region.

8. The LiDAR device of claim 1, wherein the light-blocking layer has a light transmittance of 1% or less.

9. The LiDAR device of claim 1, wherein the light-blocking layer includes chrome.

10. The LiDAR device of claim 1, further comprising
a plate on which the light-emitting unit and the light-receiving unit are mounted, and
a motor configured to rotate the plate.
